# EUROPÄISCHE PATENTANMELDUNG

(11) **EP 0 908 666 A2**
(43) Veröffentlichungstag der Anmeldung: **14.04.1999**
(21) Anmeldenummer: 98116779.4
(22) Anmeldetag: 05.09.1998
(51) Int. Cl.: F21Q 1/00, B60Q 1/26

(54) **Beleuchtungsvorrichtung für das Heck eines Fahrzeuges**

(30) Priorität: 10.10.1997 DE 19744715
(71) Anmelder: DaimlerChrysler AG, 70567 Stuttgart (DE)
(72) Erfinder: Beninga, Gerhard, 72141 Walddorfhäslach (DE); Dziuba, Martin, 71272 Renningen (DE); Harth, Martin, 84036 Landshut (DE)

(57) **Zusammenfassung**

Eine Beleuchtungsvorrichtung für das Heck eines Fahrzeuges ist mit wenigstens einer Leuchtenkammer (1) versehen, in der wenigstens eine Glühlampe (2,3) angeordnet ist. Weiterhin ist ein der Glühlampe (2,3) zugeordneter und den Lichtaustritt nach hinten abgebender Hauptreflektor (4,5) und eine lichtdurchlässige Abdeckung (16) vorgesehen. In der Leuchtenkammer (1) sind mehrere Leuchtdioden (8) angeordnet, deren Leuchtrichtung wenigstens annähernd in Fahrtrichtung (X) auf einen Nebenreflektor (9) gerichtet sind, der derart in der Leuchtenkammer (1) angeordnet ist, daß die auf ihn treffenden Lichtstrahlen (11) wenigstens annähernd quer zum Fahrzeug nach außen gerichtet werden.

## Beschreibung

Die Erfindung betrifft eine Beleuchtungsvorrichtung für das Heck eines Fahrzeuges nach der im Oberbegriff von Anspruch 1 näher definierten Art.

Eine Beleuchtungsvorrichtung dieser Art ist aus der DE 40 21 987 C2 bekannt. Mit der darin beschriebenen Vorrichtung soll eine Fahrzeugbeleuchtungsvorrichtung mit geringen vertikalen Abmessungen und einer optimalen Lichtverteilung geschaffen werden.

In der DE 42 24 061 C2 ist eine Fahrzeugrückleuchte, insbesondere für Fahrräder beschrieben, wobei als Lichtquelle eine Leuchtdiode vorgesehen ist. Da Leuchtdioden bekanntlich nur enge Leuchtwinkel besitzen, soll durch einen Lichtstreugürtel bzw. einen Reflektor eine größere nach hinten strahlende Leuchtfläche erreicht werden.

In der DE 296 02 186 U1 ist eine universelle Fahrzeugbeleuchtungsvorrichtung beschrieben, wobei unter anderem auch Reflektorleisten und Leuchtdioden vorgesehen sind. Konstruktive Ausgestaltungen über die Ausbildung und Ausgestaltung dieser Beleuchtungsvorrichtung sind aus dieser Druckschrift nicht entnehmbar.

Der vorliegenden Erfindung liegt die Aufgabe zugrunde, neben einer - bezogen auf die Fahrtrichtung - nach hinten gerichteten Ausleuchtung zusätzlich auch eine sehr gute seitliche Ausleuchtung zu erhalten, und zwar insbesondere für das Schlußlicht eines Fahrzeuges. Eine, seitliche Ausleuchtung in Form eines Seitenmarkierungslichtes ist zum Beispiel in den USA gesetzlich vorgeschrieben, weshalb diese Auflage mit der vorliegenden Erfindung ohne großen technischen Aufwand erfüllt werden soll.

Erfindungsgemäß wird diese Aufgabe durch die im kennzeichnenden Teil von Anspruch 1 genannten Merkmale gelöst.

Erfindungsgemäß sind neben den bekannten Glühlampen, deren Lichtwirkung im wesentlichen nach hinten gerichtet ist, zusätzlich noch Leuchtdioden vorgesehen, durch die eine seitliche Ausleuchtung geschaffen wird, wobei eine genügend große Leucht- bzw. Lichtwirkung durch das Zusammenspiel mit einem Nebenreflektor erreicht wird, durch den die auftreffenden Lichtstrahlen wenigstens annähernd quer zur Fahrzeugrichtung nach außen geleitet werden.

Wird dabei die Austrittsrichtung leicht nach vorne gerichtet, zum Beispiel ca. 10°, so erhält man auf einfache Weise das in den USA vorgeschriebene Seitenmarkierungslicht.

In bevorzugter Weise wird man die Erfindung für die Fahrzeugschlußlichtfunktion einsetzen. Selbstverständlich läßt sie sich jedoch in gleicher Weise auch für die Bremslichter und die Fahrtrichtungsanzeiger verwenden.

Eine sehr gute und gleichmäßige seitliche Abstrahlung des von den Leuchtdioden erzeugten Lichtes läßt sich dann erreichen, wenn in einer vorteilhaften Ausgestaltung der Erfindung der Nebenreflektor mit Abstufungen derart versehen ist, daß die von den Leuchtdioden erzeugten Lichtstrahlen wenigstens annähernd parallel zueinander über eine aufgrund der Reflektorgröße und der Leuchtdiodenanzahl vorgegebenen Fläche aus der lichtdurchlässigen Abdeckung austreten.

Wenn in einer vorteilhaften Weiterbildung der Erfindung der oder die Hauptreflektoren für die Glühlampe oder die Glühlampen ebenfalls mit Abstufungen versehen ist bzw. sind, dann erreicht man eine weitgehend gleichmäßige Ausleuchtung bzw. Lichthelligkeit über die gesamte lichtdurchlässige Abdeckung von der Rückseite her bis in den Seitenbereich.

Weitere vorteilhafte Ausgestaltungen der Erfindung ergeben sich aus den übrigen Unteransprüchen und aus dem nachfolgend anhand der Zeichnung prinzipmäßig beschriebenen Ausführungsbeispiel.

Es zeigt:

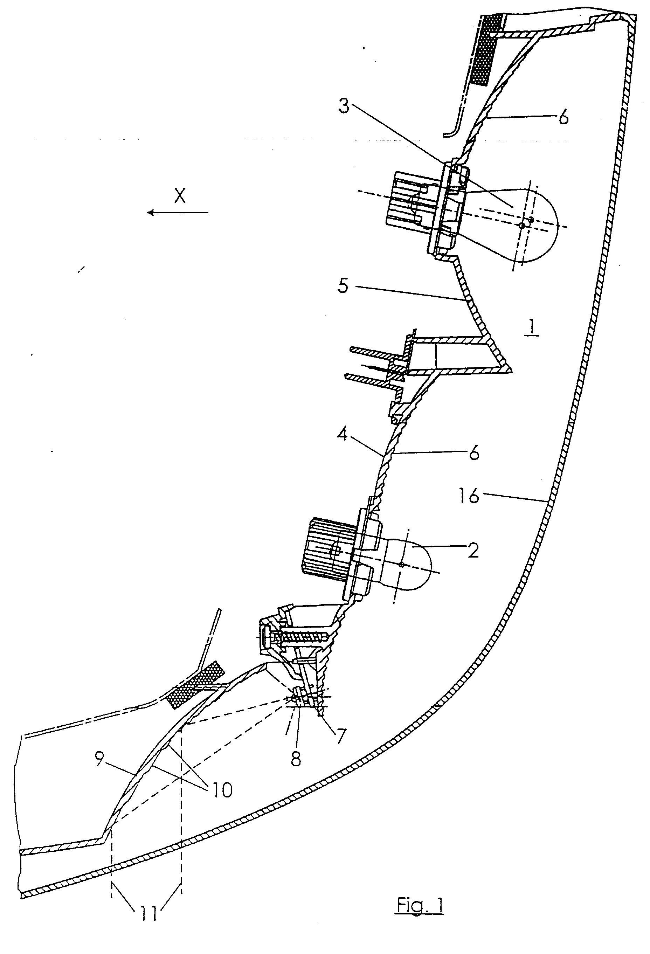

- Fig. 1: einen waagrechten Schnitt durch die erfindungsgemäße Beleuchtungsvorrichtung; und
- Fig. 2: eine Seitenansicht der Beleuchtungsvorrichtung.

Eine Beleuchtungsvorrichtung für das Heck eines Fahrzeuges weist eine Leuchtenkammer 1 auf, wobei in einer Wand der Leuchtenkammer zwei Glühlampen 2 und 3 eingesetzt sind, die eine Schlußlichtfunktion besitzen. Die größere der beiden Glühlampen 3 ist in bekannter Weise als Zweifadenlampe ausgebildet, wobei ein Faden das Schlußlicht und der zweite Faden das Nebelschlußlicht bildet.

Beide Glühlampen 2 und 3 sind jeweils mit einem Hauptreflektor 4 und 5 versehen, welche jeweils mit Abstufungen 6 versehen sind, durch die neben einer nach hinten gerichteten Leuchtwirkung auch eine seitliche Streuung derart erreicht wird, daß eine Lichtabstrahlung über eine lichtdurchlässige hintere Abdeckung 16 mit wenigstens weitgehend gleichmäßiger Lichthelligkeit erreicht wird.

Seitlich außen neben der Glühlampe 2 befindet sich eine Platine 7, wobei die Platinenebene in senkrechter Richtung mit leichter Schrägstellung gegen die Querrichtung des Fahrzeuges steht. Die Schrägstellung ist dabei so gewählt, daß die Platinenebene leicht nach außen gedreht ist. In der Platine 7 sind mehrere Leuchtdioden 8 senkrecht übereinander angeordnet. Die Anzahl der Leuchtdioden 8 richtet sich nach der Größe der gewünschten Leuchtfläche und der Größe und dem Aufbau der Leuchtenkammer 1. So können z.B. vier Leuchtdioden übereinander und gegebenenfalls auch zwei oder mehr Reihen nebeneinander angeordnet sein. Die Leuchtdioden 8 sind so in der Platine 7 angeordnet bzw. die Platine 7 ist derart positioniert, daß Lichtstrahlen 11 der Leuchtdioden 8 in Fahrtrichtung X (siehe Pfeil) nach vorne mit leichtem Schrägungswinkel nach außen gerichtet sind.

Vor den Leuchtdioden 8 befindet sich ein Nebenreflektor 9, der derart angeordnet ist und derart mit Abstufungen 10 in der Reflektorfläche versehen ist, daß die von den Leuchtdioden 8 ausgehenden und auf den Nebenreflektor 9 treffenden Lichtstrahlen 11 parallel gerichtet seitlich aus der lichtdurchlässigen Abdeckung 16 austreten.

Bei dem dargestellten Ausführungsbeispiel treten die Lichtstrahlen 11 seitlich senkrecht zur Fahrtrichtung aus. Falls gewünscht, kann durch eine leichte Abänderung der Position der Platine 7 und/oder des Nebenreflektors 9 auch eine leicht nach vorne gerichtete Abstrahlung erreicht werden, womit die gesetzlichen Forderungen nach einem Seitenmarkierungslicht in den USA erfüllt werden können.

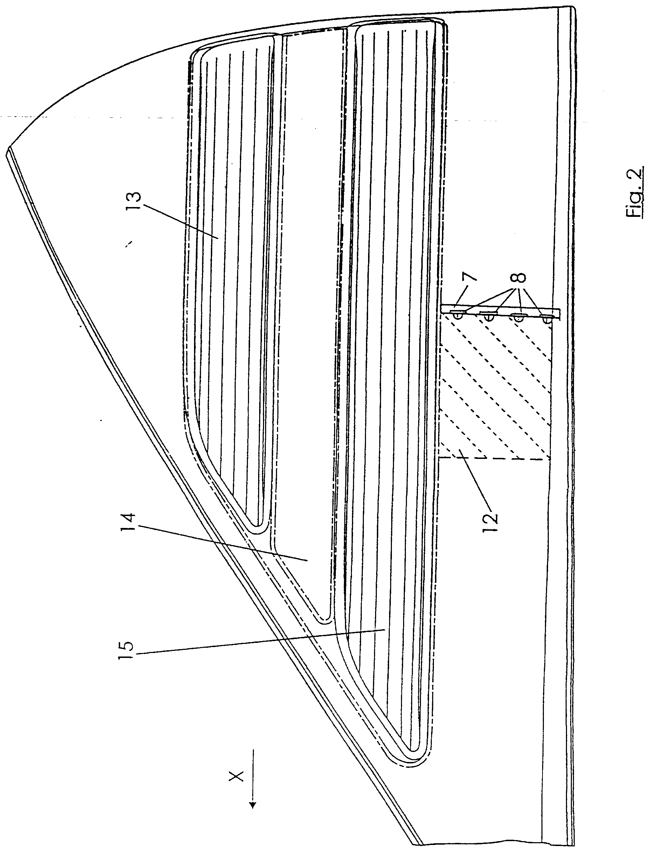

Je nach Anzahl und Anordnung der Leuchtdioden 8 ergibt sich damit eine entsprechend große ausgeleuchtete seitliche Fläche 12. In der Fig. 2 ist die seitlich ausgeleuchtete Fläche 12 prinzipmäßig gestrichelt dargestellt.

In der Fig. 2 sind über der Leuchtenkammer 1 für die Schlußlichtfunktion und der seitlich ausgeleuchteten Fläche 12 noch drei Fensterflächen 13, 14 und 15 für Blinklicht, Rückstrahler und Bremslicht vorgesehen.

Da die Funktionsweise einer Beleuchtungsvorrichtung mit den Glühlampen 2 und 3 allgemein bekannt ist, wird an dieser Stelle nicht näher darauf eingegangen. Die Stromversorgung für die Leuchtdioden 8 bzw. die Platine 7 kann in nicht näher dargestellter Weise über die gleiche Zuleitung für die Glühlampen 2 und 3 erfolgen oder durch eine von der Glühlampe 2 abgehende Nebenleitung.

## Patentansprüche

1. Beleuchtungsvorrichtung für das Heck eines Fahrzeuges mit wenigstens einer Leuchtenkammer, in der wenigstens eine Glühlampe angeordnet ist, mit einem der Glühlampe zugeordneten und den Lichtaustritt im wesentlichen nach hinten abgebenden Hauptreflektor, und mit einer lichtdurchlässigen Abdeckung der Leuchtenkammer,
**dadurch gekennzeichnet,** daß
in der Leuchtenkammer (1) mehrere Leuchtdioden (8) angeordnet sind, deren Leuchtrichtung wenigstens annähernd in Fahrtrichtung auf einen Nebenreflektor (9) gerichtet ist, wobei der Nebenreflektor (9) derart in der Leuchtenkammer (1) angeordnet ist, daß die auf ihn auftreffenden Lichtstrahlen (11) wenigstens annähernd quer zur Fahrtrichtung nach außen gerichtet werden.

2. Beleuchtungsvorrichtung nach Anspruch 1,
**dadurch gekennzeichnet,** daß
die Lichtstrahlen (11) bis zu 10° nach vorne gerichtet sind.

3. Beleuchtungsvorrichtung nach Anspruch 1 oder 2,
**dadurch gekennzeichnet,** daß
die Leuchtdioden (8) wenigstens annähernd vertikal übereinander angeordnet sind.

4. Beleuchtungsvorrichtung nach einem der Ansprüche 1 bis 3,
**dadurch gekennzeichnet,** daß
die Leuchtdioden (8) auf einer gemeinsamen Platine (7) angeordnet sind, wobei die Platinenebene leicht schräg zur Querrichtung des Fahrzeuges steht.

5. Beleuchtungsvorrichtung nach einem der Ansprüche 1 bis 4,
**dadurch gekennzeichnet,** daß
der Nebenreflektor (9) mit Abstufungen (10) in der Reflektorfläche derart versehen ist, daß die Lichtstrahlen (11) der Leuchtdioden (8) wenigstens annähernd parallel verlaufend austreten.

6. Beleuchtungsvorrichtung nach Anspruch 5,
**dadurch gekennzeichnet,** daß
zusätzlich der Hauptreflektor (4) mit Abstufungen (6) versehen ist.

7. Beleuchtungsvorrichtung nach Anspruch 5 und 6,
**dadurch gekennzeichnet,** daß
für eine Schlußlichtfunktion zwei Glühlampen (2,3) vorgesehen sind, wobei eine der beiden Glühlampen (3) zusätzlich als Nebelschlußleuchte ausgebildet ist, und wobei für beide Glühlampen (2,3) mit Abstufungen (6) versehene Hauptreflektoren (4,5) vorgesehen sind.
